# EUROPÄISCHE PATENTSCHRIFT

(11) **EP 3 826 839 B1**
(45) Veröffentlichungstag und Bekanntmachung des Hinweises auf die Patenterteilung: **21.05.2025**
(21) Anmeldenummer: 19740397.5
(22) Anmeldetag: 22.07.2019
(51) Int. Cl.: B32B 17/10

(54) **DEKORATIVES DESIGNELEMENT IM SCHWARZDRUCK**
DECORATIVE DESIGN ELEMENT IN THE BLACK PRINT
ÉLÉMENT DÉCORATIF DANS LA SÉRIGRAPHIE NOIRE

(30) Priorität: 26.07.2018 EP 18185732
(43) Veröffentlichungstag der Anmeldung: 02.06.2021
(73) Patentinhaber: Saint-Gobain Sekurit France, 60150 Thourotte (FR)
(72) Erfinder: SCHULZ, Valentin, 52382 Niederzier (DE); KOLF, Michael, 52249 Eschweiler (DE); SCHURSE, Sebastian, 52531 Übach-Palenberg (DE)
(74) Vertreter: SGR Germany-Patents
(86) Internationale Anmeldenummer: PCT/EP2019/069628
(87) Internationale Veröffentlichungsnummer: WO 2020/020806

(56) Entgegenhaltungen:
- DE-A1- 102008 017 895
- US-A1- 2008 014 414
- US-A1- 2014 355 106

## Beschreibung

Die Erfindung betrifft ein Verbundglas, das ein Designelement aufweist, und ein Verfahren zur Herstellung dieses Verbundglases. Das Verbundglas ist insbesondere als Fahrzeugscheibe geeignet.

Der Einsatz von smarten Funktionen wie eine WiFi-Funktion wird in Automobilen immer wichtiger. Um darauf hinzuweisen, dass das Fahrzeug eine solche Funktion besitzt, wird häufig ein Designelement auf eine Scheibe des Fahrzeugs angebracht. Auch andere Informationen, wie z.B. Produktinformationen, werden als Designelement auf Fahrzeugscheiben angebracht.

Derzeit werden solche Designelemente auf Fahrzeugscheiben durch einen Schwarzdruck gebildet, der druckfreie Bereiche aufweist, wodurch ein Bild durch Schwarzdruck und druckfreie Bereiche gebildet wird. Einfache Scheiben und Verbundgläser, die als Fahrzeugscheiben eingesetzt werden, sind gemäß ihrer Funktion transparent. Entsprechend sind in Verbundgläser eingesetzte Laminierschichten transparent bzw. klar. Daher weisen die Designelemente nur einen geringen Kontrast auf. Die Folge ist eine schlechte Sichtbarkeit des Designelements. Dies bedeutet, dass das Designelement nur bei einem geringen Abstand sehr nahe an dem Verbundglas überhaupt erkennbar ist.

Es sind Verfahren zur Erhöhung des Kontrastes bekannt, bei denen ein zusätzlicher Siebdruck in einer hellen Farbe verwendet wird. Dies erfordert jedoch einen zusätzlichen Prozessschritt und eine zusätzliche Siebdruckanlage und ist komplizierter, kostenintensiv und erfordert signifikante Änderungen bei vorhandenen Produktionslinien. Auch die Genauigkeit der erstellten verschiedenen Drucke kann ein Problem darstellen.

Aus der DE 10 2008 017 895 A1 ist eine Verbundglasscheibe bekannt, bei der an der Innenseite einer Außenscheibe mittels eines Siebdruckverfahrens ein Negativ des späteren sichtbaren Zeichens angebracht wird. Im Bereich des Zeichens wird eine Sichtfolie mit der Haftschicht, die die beiden Scheiben der Verbundglasscheibe zusammenhält, verklebt. So soll eine hohe Qualität des Zeichens erreicht werden. Ein Nachteil dieser Lösung ist, dass es in dem Bereich der Sichtfolie zwischen der Sichtfolie und der Scheibe zu Lufteinschlüssen beim Laminieren kommen kann, die die Darstellung des Zeichens beeinträchtigen.

Der Erfindung liegt daher die Aufgabe zu Grunde, ein Verbundglas mit einem Designelement bereitzustellen, bei dem das Designelement kontrastreicher ist und damit eine verbesserte Sichtbarkeit zeigt. Zusätzlich soll das ein Designelement aufweisende Verbundglas auf einfache und kostengünstige Weise hergestellt werden können.

Diese Aufgabe konnte insbesondere durch Einbau einer opaken, nicht-schwarzen Unterlage in den Folienverbund des Verbundglases zur Unterlegung des auf einer Scheibenseite befindlichen Designelements gelöst werden.

Die Aufgabe der vorliegenden Erfindung wird daher erfindungsgemäß durch ein Verbundglas gemäß Anspruch 1 und ein Verfahren zur Herstellung des Verbundglases gemäß Anspruch 12 gelöst. Bevorzugte Ausführungen gehen aus den Unteransprüchen hervor.

Durch den Einbau der opaken, nicht-schwarzen Unterlage ist es möglich, die druckfreien Bereiche des Designelements mit einem starken Kontrast gegenüber den Schwarzdruckbereichen hervorzuheben, wodurch eine deutlich verbesserte Sichtbarkeit des Designelements erreicht wird. Durch Auswahl der Farbe der Unterlage kann die Stärke des Kontrasts und das Aussehen des Designelements den Wünschen entsprechend eingestellt werden. Ferner ist hierfür eine relativ einfach auszuführende und kostengünstige Verfahrensmaßnahme notwendig, die keine große Änderung in den vorhandenen Produktionslinien erfordert.

Dementsprechend betrifft die vorliegende Erfindung ein Verbundglas 18, umfassend eine Außenscheibe 5, eine Innenscheibe 6, mindestens zwei Laminierschichten 7,8, die zwischen der Außenscheibe 5 und der Innenscheibe 6 angeordnet sind, und mindestens ein Designelement 9, wobei das Designelement 9 auf einem Teilbereich einer Scheibenseite der Außenscheibe 5 oder der Innenscheibe 6 aus einem bildmäßigen Schwarzdruck 15 mit einem oder mehreren druckfreien Bereichen 16 gebildet ist und zwischen den beiden Laminierschichten 7, 8 eine opake, nicht-schwarze Unterlage 10 angeordnet ist, die dem oder den druckfreien Bereichen 16 des Designelements 9 unterlegt ist.

Die Erfindung wird im Folgenden und in den beigefügten Figuren erläutert. In diesen zeigt:
- Fig. 1: ein Beispiel für ein Designelement,
- Fig. 2: eine Explosionsdarstellung eines erfindungsgemäßen Verbundglases,
- Fig. 3: ein Beispiel für ein weiteres Designelement für eine WiFi-Funktion,
- Fig. 4: eine Explosionsdarstellung eines Ausschnitts eines weiteren erfindungsgemäßen Verbundglases, der den Teilbereich zeigt, auf dem das Designelement angeordnet ist,
- Fig. 5: eine Schrägansicht eines erfindungsgemäßen Verbundglases mit drei Designelementen.

Das Verbundglas umfasst eine Außenscheibe und eine Innenscheibe, die durch mindestens zwei dazwischenliegende Laminierfolien zu einem festen Verbund laminiert werden.

Mit der Innenscheibe wird im Sinne der Erfindung die Glasscheibe bezeichnet, die beim Einbau, z.B. in ein Fahrzeug oder ein Bauwerk, als die dem Innenraum, z.B. einem Fahrzeuginnenraum oder einem Wohnraum, zugewandte Scheibe des Verbundglases vorgesehen ist. Mit der Außenscheibe wird die Glasscheibe bezeichnet, die beim Einbau, z.B. in ein Fahrzeug oder ein Bauwerk, als die der äußeren Umgebung zugewandte Scheibe vorgesehen ist.

Das Verbundglas, insbesondere für eine Fahrzeugscheibe, kann ein flaches oder gebogenes Verbundglas sein. Bei einem flachen Verbundglas sind die Innenscheibe und die Außenscheibe flach. Bei einem gebogenen Verbundglas sind die Innenscheibe und die Außenscheibe gebogen. Gebogenes Verbundglas wird z.B. als Frontscheibe oder Heckscheibe in Fahrzeugen verwendet.

Die Innenscheibe und die Außenscheibe können aus dem gleichen Material oder aus verschiedenem Material sein. Die Innenscheibe und die Außenscheibe können aus anorganischem Glas und/oder organischem Glas (Polymere) sein, wobei anorganisches Glas bevorzugt ist. In einer bevorzugten Ausführungsform enthält die Innenscheibe und/oder die Außenscheibe Flachglas, Quarzglas, Borosilikatglas, Kalk-Natron-Glas, Alkalialuminosilikatglas, Polycarbonat und/oder Polymethacrylat. Die Innenscheibe und die Außenscheibe sind bevorzugt aus Kalk-Natron-Glas.

Die Innenscheibe und die Außenscheibe können die gleiche Dicke oder unterschiedliche Dicken aufweisen. Bevorzugt weisen die Innenscheibe und die Außenscheibe unabhängig voneinander eine Dicke im Bereich von 0,4 bis 5,0 mm, z.B. 0,4 bis 3,9 mm, bevorzugter 1,6 bis 2,5 mm, auf. Aus mechanischen Gründen ist die Außenscheibe bevorzugt dicker oder gleich dick wie die Innenscheibe.

Die Innenscheibe und die Außenscheibe können klar oder getönt sein. Getönte Scheiben sind bevorzugt grau oder dunkelgrau. Die Innenscheibe und die Außenscheibe sind bevorzugt klar. Getönte Scheiben sind bevorzugt grün.

Die Innenscheibe und/oder die Außenscheibe können weitere geeignete, an sich bekannte Beschichtungen aufweisen, z.B. Antihaftbeschichtungen, getönte Beschichtungen, infrarotreflektierende Beschichtungen, z.B. in Form einer Metallbeschichtung, Antikratzbeschichtungen oder Low-E-Beschichtungen. Ein Beispiel für beschichtetes Glas ist Low-E-Glas (Low-Emissivity-Glas).

In einer bevorzugten Ausführungsform sind beide Gläser klar und die innere Seite der Außenscheibe (Seite 2) oder bevorzugt die äußere Seite der Innenscheibe (Seite 3) ist mit einer infrarotreflektierenden Beschichtung, insbesondere einer Metallbeschichtung, versehen. In einer alternativen Ausführungsform sind beide Gläser klar und im Verbund ist eine infrarotreflektierende Folie, insbesondere eine metallbeschichtete Folie, vorgesehen.

Das Verbundglas umfasst ferner zwischen Innenscheibe und Außenscheibe zwei oder mehr Laminierschichten. Die mindestens zwei Laminierschichten können gleich oder verschieden sein. Die Laminierschichten erstrecken sich jeweils im Wesentlichen über die gesamte Fläche des Verbundglases. Die folgenden Angaben beziehen sich unabhängig voneinander auf alle diese mindestens zwei Laminierschichten, sofern nicht anders angegeben.

Die Laminierschicht ist insbesondere eine polymere Laminierschicht. Vorzugsweise enthält die Laminierschicht ein thermoplastisches Polymer. In der Regel werden als Ausgangsmaterial zur Bildung der Laminierschichten entsprechende handelsübliche Laminierfolien eingesetzt. Sie dienen zur Verklebung bzw. Laminierung der Komponenten der Fahrzeugscheibe, um den haftenden Glasverbund zu erhalten.

Die Laminierschicht kann z.B. Polyvinylbutyral (PVB), Ethylenvinylacetat, Polyurethan, Polypropylen, Polyacrylat, Polyethylen, Polycarbonat, Polymethylmetacrylat, Polyvinylchlorid, Polyacetatharz, Gießharz, Acrylat, fluoriniertes Ethylen-Propylen, Polyvinylfluorid und/oder Ethylen-Tetrafluorethylen und/oder ein Gemisch und/oder ein Copolymer davon enthalten. Vorzugsweise enthält die Laminierschicht Polyvinylbutyral (PVB), Ethylenvinylacetat, Polyurethan, und/oder Gemische davon und/oder Copolymere davon, wobei PVB-Laminierschichten besonders bevorzugt sind.

Die Laminierschichten, bevorzugt PVB-Laminierschichten, weisen jeweils bevorzugt eine Dicke von 0,04 bis 1,5 mm, bevorzugter 0,1 bis 1,2 mm, noch bevorzugter von 0,3 bis 0,9 mm, auf.

Insbesondere ist die zwischen dem Designelement und der Unterlage angeordnete Laminierschicht transparent, wobei sie bevorzugt klar, d.h. farblos, oder getönt sein kann. Getönte Laminierschichten sind bevorzugt grau, blau oder grün getönt. Die Laminierschicht zwischen dem Designelement und der Unterlage ist bevorzugt klar, da auf diese Weise der durch die Unterlage erreichte Kontrast des Designelements am besten zur Geltung kommt. Es ist aber auch der Einsatz einer getönten Laminierschicht möglich, wenn für das Designelement ein spezieller optischer Effekt gewünscht ist.

Die Laminierschichten, die nicht zwischen dem Designelement und der Unterlage angeordnet sind, sind ebenfalls vorzugsweise transparent, wobei sie klar oder getönt sein können. Getönte Laminierschichten sind bevorzugt grau, blau oder grün getönt.

Das Verbundglas weist mindestens ein Designelement auf. Das Designelement ist auf einem Teilbereich einer Scheibenseite der Außenscheibe oder der Innenscheibe aus einem bildmäßigen Schwarzdruck mit einem oder mehreren druckfreien Bereichen gebildet.

Bei der Scheibenseite der Außenscheibe oder der Innenscheibe kann es sich um eine oder mehrere von der äußeren Seite der Außenscheibe, hier auch als Seite 1 bezeichnet, der inneren Seite der Außenscheibe, hier auch als Seite 2 bezeichnet, der äußeren Seite der Innenscheibe, hier auch als Seite 3 bezeichnet, und der inneren Seite der Innenscheibe, hier auch als Seite 4 bezeichnet, handeln.

In bevorzugten Ausführungsformen ist die Scheibenseite, auf die das Designelement aufgedruckt ist, die Seite 2 und/oder die Seite 4, wobei die Scheibenseite, auf die das Designelement aufgedruckt ist, besonders bevorzugt die Seite 2 ist.

Das Designelement ist aus einem bildmäßigen Schwarzdruck mit einem oder mehreren druckfreien Bereichen gebildet. Ein bildmäßiger Schwarzdruck mit einem oder mehreren druckfreien Bereichen bedeutet, dass ein Bild aus der Kombination von einem oder mehreren Bereichen, die einen schwarzen Druck aufweisen, und einem oder mehreren druckfreien Bereichen erzeugt wird. Es handelt sich dementsprechend um einen einfarbigen Druck, bei dem das Bild des Designelements durch schwarz gefärbte Bereiche und frei gelassene Bereiche dargestellt wird. Solche Designelemente, die aus einem bildmäßigen Schwarzdruck mit einem oder mehreren druckfreien Bereichen gebildet werden, sind in der Technik bekannt.

Die bildmäßige Information kann sich dabei aus den druckfreien Bereichen oder den schwarz gefärbten Bereichen oder einer Kombination davon ergeben. Bei dem bildmäßigen Schwarzdruck kann es sich z.B. um einen Stempeldruck, wie einem Produktstempel, oder um einen Negativdruck handeln, wobei es sich bevorzugt um einen Negativdruck handelt. Der Negativdruck ist dabei bevorzugt im Schwarzdruck ausgespart.

Bei der durch das Designelement gebildeten Darstellung kann es sich z.B. um Schriftzeichen, Symbole, Hinweiszeichen, graphische Muster, ein Logo oder Kombinationen davon handeln. Das Designelement kann sich als dekoratives Designelement eignen.

Für den bildmäßigen Schwarzdruck kann eine beliebige schwarze Farbe verwendet werden. Beispiele sind ein Schwarzdruck aus schwarzer Keramikfarbe oder anderen schwarzen Druckfarben, wobei schwarze Keramikfarbe, die auch als schwarze Emailfarbe bezeichnet wird, bevorzugt ist. Bei dem bildmäßigen Schwarzdruck handelt es sich bevorzugt um einen Siebdruck mit einer schwarzen Keramikfarbe. Dies ist das in der Technik übliche Verfahren.

Das Verbundglas weist seiner Funktion entsprechend einen Durchsichtsbereich auf, in dem das Verbundglas keinen Schwarzdruck aufweist. In der Regel macht der Durchsichtsbereich des Verbundglases mindestens 30%, bevorzugt mindestens 50% der Fläche des Verbundglases aus, z.B. bei Dachscheiben, kann aber auch mit mindestens 70% oder mindestens 80% deutlich größer sein, z.B. bei Windschutzscheiben oder Heckscheiben. Es versteht sich, dass das Designelement nur auf einem Teilbereich des Verbundglases vorliegt und dieser Teilbereich außerhalb des Durchsichtsbereichs liegt.

Die Größe des mindestens einen Designelements ist ansonsten nicht grundsätzlich beschränkt. Es können ein oder mehrere Designelemente vorhanden sein.

Das Designelement kann an einer beliebigen Position des Verbundglases angeordnet sein. Vorzugsweise befindet es sich im Randbereich des Verbundglases. Im Allgemeinen ist es aber bevorzugt, dass das Designelement einen Abstand von mindestens 10 mm vom Rand des Verbundglases aufweist.

Das erfindungsgemäße Verbundglas umfasst ferner eine opake, nicht-schwarze Unterlage, die zwischen den beiden Laminierschichten so angeordnet ist, dass sie dem oder den druckfreien Bereichen des Designelements unterlegt ist. Der Ausdruck "unterlegt" bedeutet hier, dass die Unterlage sich, bezogen auf die beabsichtigte Blickrichtung auf das Designelement, hinter dem oder den druckfreien Bereichen des Designelements befindet, wobei die beabsichtigte Blickrichtung bei einem Designelement auf einer Scheibenseite der Außenscheibe von außen nach innen ist und bei einem Designelement auf einer Scheibenseite der Innenseite von innen nach außen ist. Auf diese Weise wird die Unterlage bei der beabsichtigten Blickrichtung durch die druckfreien Bereiche hindurch sichtbar und bewirkt einen höheren Kontrast.

Während die Laminierschichten allgemein ganzflächig im gesamten Bereich des Verbundglases vorliegen, befindet sich die Unterlage nur in einem Teilbereich des Verbundglases.

Die Größe der Unterlage kann gleich der Größe des Designelements sein. Die Größe der Unterlage kann aber auch kleiner als die Größe des Designelements sein, sofern alle druckfreien Bereiche des Designelements mit der Unterlage unterlegt werden können. Die Unterlage ist bevorzugt zumindest etwas größer als es zur Unterlegung der druckfreien Bereiche des Designelements erforderlich ist. Dies kann zweckmäßig sein, damit etwaige Ungenauigkeiten in der Positionierung nicht unmittelbar dazu führen, dass ein Teil der druckfreien Bereiche von der Unterlage nicht unterlegt ist. Eine etwas größere Abmessung der Unterlage kann auch wegen einer besseren Handhabbarkeit des die Unterlage bildenden Folienstücks zweckmäßig sein. Die Unterlage kann gegebenenfalls auch größer sein als das Designelement, z.B. wenn das Designelement von einem vollflächigen Schwarzdruck umgeben ist wie nachstehend beschrieben. Die Unterlage sollte aber so positioniert und dimensioniert sein, dass sie nicht in den Durchsichtsbereich des Verbundglases hineinragt.

Die Größe der Unterlage hängt somit im Wesentlichen von der Größe und Art des Designelements ab, die Fläche der Unterlage kann z.B. nicht mehr als 70%, bevorzugt nicht mehr als 50%, bevorzugter nicht mehr als 20% und insbesondere nicht mehr als 5%, bevorzugt nicht mehr als 2%, der Fläche des Verbundglases betragen. Dies hängt auch von der Verwendung des Verbundglases ab. So sind z.B. bei einer Dachscheibe relativ große Designelemente denkbar, während bei Heck- oder Windschutzscheiben eher kleinere Designelemente bevorzugt sind. Die Anzahl der Unterlagen entspricht im allgemeinen der Anzahl der vorhandenen Designelemente.

Die Geometrie der Unterlage ist beliebig. In der Praxis sind z.B. rechteckige Unterlagen zweckmäßig. Die Geometrie kann aber auch an die Geometrie des Designelements angepasst werden und z.B. kreisförmig oder unregelmäßig sein.

Bei der Unterlage handelt es sich um ein Flächenmaterial. Da die Unterlage nur in einem Teilbereich des Verbundglases angeordnet ist, ergeben sich Dickenänderungen im Verbundglas. Um zu große Dickenänderungen im Verbundglas zu vermeiden, sollte die Unterlage nicht zu dick sein. Andererseits können sich Schwierigkeiten bei der Handhabung des die Unterlage bildenden Folienstücks ergeben, wenn die Unterlage zu dünn ist.

Im allgemeinen ist es daher zweckmäßig, wenn die Unterlage eine Dicke im Bereich von 1 bis 120 µm, bevorzugt 10 bis 100 µm und bevorzugter 20 bis 70 µm aufweist.

Die Unterlage ist opak und weist eine nicht-schwarze Farbe auf. Die Farbe der Unterlage kann nach Bedarf gewählt werden. Alle nicht-schwarze Farben sind denkbar. Vorzugsweise wird eine Farbe gewählt, die einen großen Kontrast zum Schwarzdruck aufweist. Die opake Unterlage ist besonders bevorzugt weiß. Bei einer weißen Unterlage ergibt sich der stärkste Kontrast, wodurch die Sichtbarkeit des Designelements optimiert wird.

Bei der opaken Unterlage handelt es bevorzugt um eine Kunststoffunterlage, insbesondere eine flächige Kunststoffunterlage. Diese wird gewöhnlich aus einem entsprechenden Folienstück gebildet. Die Kunststoffunterlage enthält in der Regel farbgebende Mittel, z.B. Pigmente, um Opazität und Farbigkeit zu erlangen.

Die opake Unterlage kann z.B. aus einem Polymer, insbesondere einem thermoplastischen Polymer, wie z.B. Polyethylenterephthalat (PET), gebildet sein, das den Hauptbestandteil oder den einzigen Bestandteil der Unterlagenmatrix bildet. Neben dem genannten Polymer kann die Unterlage weitere Polymere und Additive enthalten, wie sie auf dem Gebiet üblich sind. Beispiele für Additive sind farbgebende Mittel, wie z.B. Pigmente, UV-Schutzmittel, Füllstoffe und dergleichen. Wie vorstehend ausgeführt enthält die Unterlage in der Regel farbgebende Mittel, z.B. Pigmente, zur Erlangung von Opazität und Farbigkeit.

Die opake, nicht-schwarze Unterlage ist besonders bevorzugt aus PET gebildet, wobei eine weiße PET-Unterlage besonders bevorzugt ist. PET-Unterlagen sind besonders bevorzugt, da dünne PET-Folien im Bereich der gewünschten Unterlagendicke zur Verfügung stehen und PET eine gute Verträglichkeit mit den Laminierschichten, insbesondere den PVB-Laminierschichten, aufweist.

Das Verbundglas kann auch einen vollflächig ausgebildeten Schwarzdruck aufweisen, der bevorzugt am Seitenrand des Verbundglases ausgebildet ist und dabei vorzugsweise den ganzen Seitenrand des Verbundglases umläuft. Verbundgläser, insbesondere Verbundgläser für Fahrzeugscheiben, werden häufig mit einem vollflächigen Schwarzdruck am Seitenrand versehen, um bestimmte Elemente optisch zu verdecken, die für den Einbau in ein Fahrzeug oder Bauwerk erforderlich sind, wie z.B. Klebverbindungen.

Der vollflächige Schwarzdruck kann mit den gleichen Verfahren und den gleichen Druckfarben durchgeführt werden, die hier auch für den bildmäßigen Schwarzdruck beschrieben sind, worauf verwiesen wird. Zur Bildung des vollflächigen Schwarzdrucks ist ebenfalls ein Siebdruck mit schwarzen Keramikfarben üblich und bevorzugt.

In einer bevorzugten Ausführungsform ist das Designelement von einem vollflächig ausgebildeten Schwarzdruck umgeben, wobei der vollflächig ausgebildete Schwarzdruck bevorzugt in einem Randbereich des Verbundglases ausgebildet ist, wobei der vollflächig ausgebildete Schwarzdruck besonders bevorzugt den ganzen Randbereich des Verbundglases umläuft. Auch in diesem Fall ist es allgemein bevorzugt, dass das Designelement einen Abstand von mindestens 10 mm vom Rand des Verbundglases aufweist. Wenn das Designelement in einem vollflächig ausgebildeten Schwarzdruck enthalten ist, ist es gewöhnlich zweckmäßig, Designelement und vollflächigen Schwarzdruck in einem Schritt auf dieselbe Scheibenseite aufzudrucken, wobei die Scheibenseite bevorzugt Seite 2 und/oder Seite 4, bevorzugter Seite 2, ist.

In einer bevorzugten Ausführungsform weist die Scheibe, die der das Designelement aufweisende Scheibe gegenübersteht, in deckungsgleicher Position zum

Designelement das gleiche Designelement, ein anderes Designelement oder einen vollflächigen Schwarzdruck auf. Dies ist vorteilhaft, um den Blick auf die opake Unterlage von der Blickrichtung zu verdecken, die für das Designelement nicht die beabsichtigte Blickrichtung ist. Im Fall eines gleichen oder unterschiedlichen Designelements auf der gegenüberstehenden Scheibe erreicht man zusätzlich, dass sowohl von innen als auch von außen auf das Designelement geblickt werden kann.

Das Verbundglas kann ferner gegebenenfalls eine oder mehrere zusätzliche Funktionsschichten, insbesondere polymere Funktionsschichten, zwischen der Außenscheibe und der Innenscheibe umfassen. Solche zusätzlichen Funktionsschichten sind auf dem Gebiet bekannt. In der Regel werden als Ausgangsmaterial zur Bildung der Funktionsschichten entsprechende handelsübliche Funktionsfolien eingesetzt.

Beispiele für optionale zusätzliche Funktionsschichten sind Akustikschichten oder IR-reflektierende Schichten. IR steht wie üblich als Abkürzung für Infrarot. Sofern zusätzliche Funktionsschichten enthalten sind, sind sie bevorzugt zwischen zwei Laminierschichten angeordnet. Die Funktionsschichten können z.B. jeweils eine Dicke im Bereich von 0,04 bis 1,5 mm, bevorzugt 0,1 bis 1,5 mm, bevorzugter von 0,3 bis 0,9 mm, aufweisen.

Akustikschichten sind z.B. aus mehreren, z.B. drei, PVB-Schichten aufgebaut, wobei in der Mitte eine weichere PVB-Schicht enthalten ist. Da die Akustikschichten auch als Laminierschichten geeignet sind, können sie eine Doppelfunktion ausüben.

IR-reflektierende Schichten sind z.B. aus einer polymeren Trägerschicht und einer darauf befindlichen IR-reflektierenden Beschichtung gebildet. Die polymere Trägerschicht kann z.B. aus Polyester, Polycarbonat, Celluloseacetat, Acrylat oder Polyvinylchlorid gebildet sein. Die IR-reflektierende Beschichtung kann grundsätzlich unterschiedlich ausgebildet sein und umfasst bevorzugt mindestens eine Silberschicht. Allgemein üblich sind Mehrfachschichten mit einer oder mehreren Silberschichten als eigentlicher Funktionsschicht, die zwischen metallischen und/oder dielektrischen Schichten eingebettet sind. Wie vorstehend ausgeführt, sind IR-reflektierende Beschichtungen zusätzlich oder bevorzugt alternativ direkt auf der Innenscheibe oder Außenscheibe denkbar, wofür ebenfalls mindestens eine Silberschicht oder die genannten Mehrfachschichten eingesetzt werden können.

Im Allgemeinen ist es bevorzugt, dass zwischen der Unterlage und der Scheibe, die das Designelement trägt, nur eine Laminierschicht vorhanden ist. Gegebenenfalls können aber mehr als eine Laminierschicht und/oder eine oder mehrere Funktionsschichten zwischen Unterlage und der Scheibe, die das Designelement trägt, angeordnet werden, sofern es sich bei diesen Schichten jeweils um transparente Schichten handelt. Dies ist aber weniger bevorzugt.

Das erfindungsgemäße Verbundglas eignet sich insbesondere als Fahrzeugscheibe oder als Bauverglasung. Das Verbundglas ist besonders bevorzugt eine Fahrzeugscheibe, insbesondere eine Automobilscheibe, z.B. eine Dachscheibe, eine Seitenscheibe, eine Frontscheibe oder eine Heckscheibe.

Die Erfindung betrifft ferner ein Verfahren zur Herstellung eines erfindungsgemäßen Verbundglases wie vorstehend beschrieben, wobei das Verfahren folgende Schritte umfasst:
a) bildmäßiges Aufdrucken einer schwarzen Farbe auf einen Teilbereich einer Seite einer Scheibe, wodurch ein Designelement 9 aus einem Schwarzdruck mit einem oder mehreren druckfreien Bereichen gebildet wird,
b) Bereitstellen einer Anordnung, die in dieser Reihenfolge eine Außenscheibe 5, eine erste Laminierfolie 8, eine zweite Laminierfolie 7 und eine Innenscheibe 6 umfasst, wobei für die Außenscheibe 5 oder die Innenscheibe 6 die in Schritt a) erhaltene Scheibe mit dem Designelement 9 verwendet wird und wobei ein opakes, nicht-schwarzes Folienstück so zwischen die beiden Laminierfolien 7, 8 positioniert wird, dass sie im fertigen Verbundglas 18 dem oder den druckfreien Bereichen 16 des Designelements 9 als Unterlage 10 unterlegt ist, und
c) Wärmebehandlung der in Schritt b) erhaltenen Anordnung zum Laminieren der Anordnung unter Bildung des Verbundglases.

Alle vorstehenden Angaben für das erfindungsgemäße Verbundglas gelten entsprechend auch für das erfindungsgemäße Verfahren.

Das bildmäßige Aufdrucken der schwarzen Farbe kann z.B. mittels Siebdruck, Tintenstrahldruck oder Lasertransferdruck durchgeführt werden, wobei Siebdruck bevorzugt ist. Als schwarze Farbe eignen sich alle üblichen Farben, z.B. Keramikfarbe oder andere Druckfarben, wobei Keramikfarbe bevorzugt ist. Bevorzugt erfolgt der bildmäßige Aufdruck durch Siebdruck mit schwarzer Keramikfarbe. Wenn das Designelement von einem vollflächigen Schwarzdruck umgeben ist, der vorzugsweise den Seitenrand des Verbundglases umläuft, können der bildmäßige Aufdruck und der vollflächige Schwarzdruck in einem Schritt gemeinsam aufgedruckt werden, z.B. durch Siebdruck.

Je nach eingesetzter Druckfarbe für das Designelement ist gegebenenfalls auch eine Wärmebehandlung zum Einbrennen der Druckfarbe notwendig, insbesondere, wenn Keramikfarben bzw. Emailfarben eingesetzt werden. Die Wärmebehandlung zum Einbrennen kann z.B. bei Temperaturen im Bereich von 400 °C bis 700 °C, bevorzugt 550 °C bis 650 °C, durchgeführt werden, insbesondere wenn das Aufdrucken mit einer Keramikfarbe erfolgt. Die erforderliche Wärmbehandlung oder das Einbrennen des Schwarzdrucks wird gewöhnlich nach dem Druck und vor dem Anordnen und Laminieren des Verbundglases durchgeführt.

Das opake, nicht-schwarze Folienstück wird in Schritt b) so zwischen die beiden Laminierfolien positioniert, dass es im fertigen Verbundglas dem oder den druckfreien Bereichen des Designelements als Unterlage unterlegt ist.

In einer bevorzugten Ausführungsform wird das opake Folienstück in Schritt b) nach der Positionierung an einer der beiden Laminierfolien vorfixiert. Dies erfolgt vorzugsweise durch Wärmebehandlung, z.B. mithilfe eines Heißluftföns. Die Positionierung und gegebenenfalls Vorfixierung des opaken Folienstücks auf einer Laminierfolie kann erfolgen, bevor oder nachdem die Laminierfolie auf die zu bildende Anordnung angeordnet wurde.

Für das opake Folienstück gelten die vorhergehenden Angaben zur Unterlage in gleicher Weise, insbesondere hinsichtlich der Abmessungen, der Dicke und der Art, so dass darauf verwiesen wird. Dementsprechend ist das opake Folienstück bevorzugt ein PET-Folienstück, insbesondere ein weißes PET-Folienstück.

Die Laminierung der Anordnung erfolgt mithilfe einer Wärmebehandlung, was z.B. unter Atmosphärendruck, Unterdruck oder Überdruck durchgeführt werden kann. Die Laminierung der Anordnung kann z.B. an Luft oder unter Schutzgasatmosphäre erfolgen. Der Fachmann ist mit den geeigneten Verfahren und Bedingungen gut vertraut.

Die Wärmebehandlung der in Schritt b) erhaltenen Anordnung zum Laminieren der Anordnung erfolgt nach den bekannten Standardverfahren, z.B. bei Temperaturen von nicht mehr als 200 °C, z.B. im Bereich von 80 bis 150 °C.

Die Erfindung wird nachfolgend anhand von nicht einschränkenden Ausführungsbeispielen unter Bezug auf die beigefügten Zeichnungen weiter erläutert. Die Zeichnungen sind schematisch und nicht maßstabsgetreu.

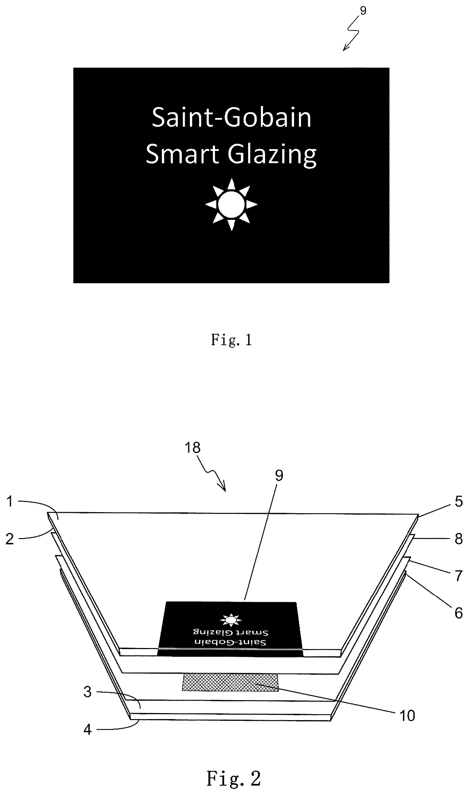

Fig. 1 zeigt ein Beispiel für ein Designelement 9, bei dem die druckfreien Bereiche 16 in einem Schwarzdruck 15 Schriftzüge und Symbole darstellen. Das Designelement ist als Negativdruck gebildet. Durch eine unterlegte weiße Unterlage (nicht gezeigt) ergibt sich ein guter Kontrast und eine gute Sichtbarkeit.

Fig. 2 zeigt eine Explosionsdarstellung eines erfindungsgemäßen Verbundglases 18, das ein Designelement 9 gemäß Fig. 1 aufweist. Das Verbundglas weist eine Außenscheibe 5 und eine Innenscheibe 6 auf, zwischen denen zwei Laminierschichten 7,8 angeordnet sind. Die beiden Laminierschichten 7, 8 sind beide klare PVB-Laminierschichten z.B. mit einer Dicke im Bereich von etwa 0,3 bis 0,9 mm. Das Designelement 9 wurde auf einen Teilbereich der inneren Seite 2 der Außenscheibe 5 (Seite 2) bildmäßig aufgedruckt. Dies erfolgte durch Siebdruck mit einer schwarzen Keramikfarbe. Eine opake, weiße PET-Unterlage 10 ist so zwischen den beiden Laminierschichten 7, 8 angeordnet, dass sie den druckfreien Bereichen des Designelements 9 unterlegt ist. Die Abmessungen der Unterlage sind kleiner als die Abmessungen des Designelements 9, aber etwas größer als es für die Unterlegung der druckfreien Bereiche des Designelements 9 erforderlich wäre. Die Abmessung des Designelements kann z.B. etwa 200 x 300 mm betragen, es sind aber genauso gut kleinere oder größere Abmessungen möglich. Die Dicke der Unterlage liegt z.B. im Bereich von 20 bis 70 µm, z.B. etwa 50 µm. Durch die unterlegte weiße Unterlage ergibt sich ein guter Kontrast und eine gute Sichtbarkeit für das Designelement.

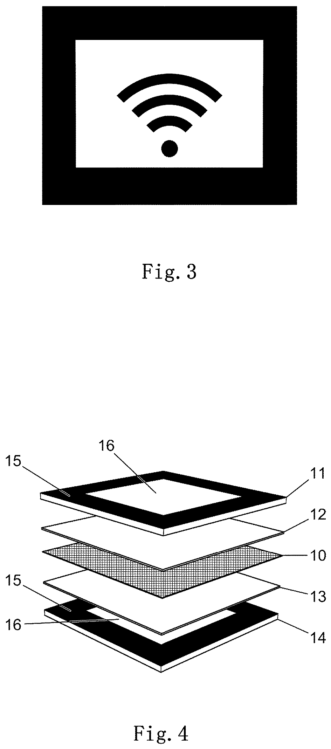

Fig. 3 zeigt ein Beispiel für ein Designelement mit einem Symbol für eine WiFi-Funktion. Das WiFi-Symbol wird durch einen Schwarzdruck dargestellt, der von einem druckfreien Bereich umgeben ist, der wiederum von einem Schwarzdruck umrahmt ist. Durch eine unterlegte weiße Unterlage (nicht gezeigt) ergibt sich ein guter Kontrast und eine gute Sichtbarkeit.

Fig. 4 zeigt eine Explosionsdarstellung eines Ausschnitts eines weiteren erfindungsgemäßen Verbundglases 18, der nur den Teilbereich zeigt, auf dem ein Designelement angeordnet ist. Das Designelement 9 mit Schwarzdruckbereich 15 und druckfreiem Bereich 16 entspricht dem Designelement von Fig. 3, außer dass kein WiFi-Zeichen im Inneren vorhanden ist. Der Ausschnitt des Verbundglases zeigt einen Teilbereich der Außenscheibe 14 und einen Teilbereich der Innenscheibe 11, zwischen denen Teilbereiche von zwei Laminierschichten 12, 13 gezeigt sind. Die beiden Laminierschichten 12, 13 sind beide PVB-Laminierschichten, wobei die zwischen Außenglas und Unterlage befindliche Laminierschicht 13 klar ist und die zwischen Innenglas und Unterlage befindliche Laminierschicht 12 getönt ist. Das Designelement 9 wurde auf dem Teilbereich des Außenglases und deckungsgleich auf dem Teilbereich des Innenglases bildmäßig aufgedruckt, genauer auf die innere Seite der Außenscheibe 14 (Seite 2) und die innere Seite der Innenscheibe 11 (Seite 4). Dies erfolgte jeweils durch Siebdruck mit einer schwarzen Keramikfarbe. Eine opake, weiße PET-Unterlage 10 ist so zwischen den Teilbereichen der beiden Laminierschichten 12, 13 angeordnet, dass sie den druckfreien Bereichen des Designelements 9 unterlegt ist. Die Abmessung der Unterlage 10 entspricht der Abmessung des Designelements 9. Die Dicke der Unterlage 10 liegt z.B. im Bereich von 20 bis 70 µm, z.B. etwa 50 µm. Durch die unterlegte weiße Unterlage ergibt sich ein guter Kontrast und eine gute Sichtbarkeit für das Designelement.

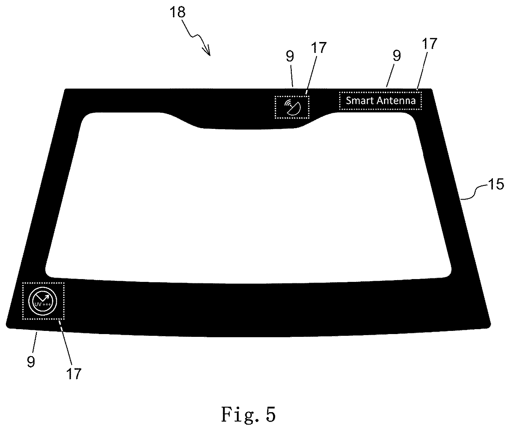

Fig. 5 zeigt eine Schrägansicht eines weiteren erfindungsgemäßen Verbundglases 18 mit drei Designelementen 9 (Draufsicht auf die Außenscheibe). Das Verbundglas weist einen um den ganzen Randbereich des Verbundglases umlaufenden vollflächigen Schwarzdruck 15 auf. Die drei Designelemente 9 sind in dem vollflächigen Schwarzdruck ausgebildet und davon umgeben. Der vollflächige Schwarzdruck und die drei Designelemente 9 wurden zusammen in einem Schritt mittels Siebdruck mit schwarzer Keramikfarbe auf Seite 2 des Verbundglases aufgedruckt. Der zentrale Bereich des Verbundglases ohne Schwarzdruck stellt den Durchsichtsbereich des Verbundglases dar. Auf der Seite 4 des Verbundglases kann gegebenenfalls ein vollflächiger Schwarzdruck deckungsgleich zum vollflächigen Schwarzdruck aus Seite 2, aber ohne Designelemente aufgedruckt sein. Die gepunkteten Umrandungen 17 um die Designelemente 9 sind keine tatsächlichen gepunkteten Umrandungen des Verbundglases, sondern sollen auf die Position und Abmessung der jeweiligen unterlegten weißen Unterlage hinweisen, die sich innerhalb des Verbundglases befindet und bei dieser Darstellung nicht sichtbar sind.

### Bezugszeichenliste

- 1: äußere Seite der Außenscheibe (Seite 1)
- 2: innere Seite der Außenscheibe (Seite 2)
- 3: äußere Seite der Innenscheibe (Seite 3)
- 4: innere Seite der Innenscheibe (Seite 4)
- 5: Außenscheibe
- 6: Innenscheibe
- 7: zweite Laminierschicht
- 8: erste Laminierschicht
- 9: Designelement
- 10: opake Unterlage
- 11: Teilbereich Innenscheibe
- 12: Teilbereich zweite Laminierschicht
- 13: Teilbereich erste Laminierschicht
- 14: Teilbereich Außenscheibe
- 15: Schwarzdruck
- 16: druckfreier Bereich
- 17: Position Unterlage
- 18: Verbundglas

## Patentansprüche

1. Verbundglas (18), umfassend eine Außenscheibe (5), eine Innenscheibe (6), mindestens zwei Laminierschichten (7,8), die zwischen der Außenscheibe (5) und der Innenscheibe (6) angeordnet sind, und mindestens ein Designelement (9), wobei das Designelement (9) auf einem Teilbereich einer Scheibenseite der Außenscheibe (5) oder der Innenscheibe (6) aus einem bildmäßigen Schwarzdruck (15) mit einem oder mehreren druckfreien Bereichen (16) gebildet ist und nur in einem Teilbereich des Verbundglases (18) zwischen den beiden Laminierschichten (7, 8) eine opake, nicht-schwarze Unterlage (10) angeordnet ist, die dem oder den druckfreien Bereichen (16) des Designelements (9) unterlegt ist und wobei die Laminierschichten (7, 8) ganzflächig im gesamten Bereich des Verbundglases (18) vorliegen.

2. Verbundglas nach Anspruch 1, wobei die Unterlage (10) eine Dicke im Bereich von 1 bis 120 µm, bevorzugt 10 bis 100 µm und bevorzugter 20 bis 70 µm aufweist.

3. Verbundglas nach Anspruch 1 oder 2, wobei die opake, nicht-schwarze Unterlage (10) eine weiße Farbe aufweist.

4. Verbundglas nach irgendeinem der vorhergehenden Ansprüche, wobei die opake, nicht-schwarze Unterlage (10) aus Polyethylenterephthalat (PET) gebildet ist.

5. Verbundglas nach irgendeinem der vorhergehenden Ansprüche, wobei die Scheibenseite, auf die das Designelement (9) aufgedruckt ist, die innere Seite (2) der Außenscheibe (5) ist.

6. Verbundglas nach irgendeinem der vorhergehenden Ansprüche, wobei die zwischen dem Designelement (9) und der Unterlage (10) befindliche Laminierschicht (8) klar oder getönt, bevorzugt klar, ist.

7. Verbundglas nach irgendeinem der vorhergehenden Ansprüche, wobei das Designelement (9) von einem vollflächig ausgebildeten Schwarzdruck umgeben ist, wobei der vollflächig ausgebildete Schwarzdruck bevorzugt in einem Randbereich des Verbundglases ausgebildet ist und bevorzugt den ganzen Randbereich des Verbundglases umläuft.

8. Verbundglas nach irgendeinem der vorhergehenden Ansprüche, bei dem die Scheibe, die der das Designelement (9) aufweisende Scheibe gegenübersteht, in deckungsgleicher Position zum Designelement das gleiche Designelement, ein anderes Designelement oder einen vollflächigen Schwarzdruck aufweist.

9. Verbundglas nach irgendeinem der vorhergehenden Ansprüche, bei dem die beiden Laminierschichten (7, 8) jeweils eine Polyvinylbutyral (PVB)-Schicht sind und/oder eine oder mehrere zusätzliche Funktionsschichten zwischen der Außenscheibe (5) und der Innenscheibe (6) angeordnet sind.

10. Verbundglas nach irgendeinem der vorhergehenden Ansprüche, wobei der Schwarzdruck des Designelements (9) aus einer Keramikfarbe gebildet ist.

11. Verbundglas nach irgendeinem der vorhergehenden Ansprüche, das eine Fahrzeugscheibe oder eine Bauverglasung, bevorzugt eine Fahrzeugscheibe, ist.

12. Verfahren zur Herstellung eines Verbundglases (18) nach irgendeinem der Ansprüche 1 bis 11, umfassend
a) bildmäßiges Aufdrucken einer schwarzen Farbe auf einen Teilbereich einer Seite einer Scheibe, wodurch ein Designelement (9) aus einem Schwarzdruck mit einem oder mehreren druckfreien Bereichen gebildet wird,
b) Bereitstellen einer Anordnung, die in dieser Reihenfolge eine Außenscheibe (5), eine erste Laminierfolie (8), eine zweite Laminierfolie (7) und eine Innenscheibe (6) umfasst, wobei für die Außenscheibe (5) oder die Innenscheibe (6) die in Schritt a) erhaltene Scheibe mit dem Designelement (9) verwendet wird und wobei ein opakes, nicht-schwarzes Folienstück so zwischen die beiden Laminierfolien (7, 8) positioniert wird, dass es im fertigen Verbundglas (18) dem oder den druckfreien Bereichen (16) des Designelements (9) als Unterlage (10) unterlegt ist, und
c) Wärmebehandlung der in Schritt b) erhaltenen Anordnung zum Laminieren der Anordnung unter Bildung des Verbundglases.

13. Verfahren nach Anspruch 12, wobei das bildmäßige Aufdrucken der schwarzen Farbe mittels Siebdruck, Tintenstrahldruck oder Lasertransferdruck durchgeführt wird, wobei Siebdruck bevorzugt ist.

14. Verfahren nach Anspruch 12 oder 13, wobei in Schritt b) das opake Folienstück nach der Positionierung an einer Laminierfolie vorfixiert wird, vorzugsweise durch Wärmebehandlung.

15. Verfahren nach irgendeinem der Ansprüche Anspruch 12 bis 14, wobei die Positionierung und gegebenenfalls Vorfixierung des opaken Folienstücks auf einer Laminierfolie erfolgt, bevor oder nachdem sie auf die zu bildende Anordnung angeordnet wurde.

## Claims

1. Laminated glass (18), comprising an outer pane (5), an inner pane (6), at least two laminating layers (7,8), which are arranged between the outer pane (5) and the inner pane (6), and at least one design element (9), wherein the design element (9) is formed on a partial region of a pane side of the outer pane (5) or the inner pane (6) from an image-based black print (15) with one or more print-free regions (16), and an opaque, non-black underlay (10) is arranged only in a partial region of the laminated glass (18) between the two laminating layers (7, 8), which underlay is placed under the print-free region(s) (16) of the design element (9), and wherein the laminating layers (7, 8) are present over the entire surface of the whole region of the laminated glass (18).

2. Laminated glass according to claim 1, wherein the underlay (10) has a thickness in the range of 1 to 120 µm, preferably 10 to 100 µm and more preferably 20 to 70 µm.

3. Laminated glass according to claim 1 or 2, wherein the opaque, non-black underlay (10) has a white color.

4. Laminated glass according to any one of the preceding claims, wherein the opaque, non-black underlay (10) is formed from polyethylene terephthalate (PET).

5. Laminated glass according to any one of the preceding claims, wherein the pane side on which the design element (9) is printed is the inner side (2) of the outer pane (5).

6. Laminated glass according to any one of the preceding claims, wherein the laminating layer (8) located between the design element (9) and the underlay (10) is clear or tinted, preferably clear.

7. Laminated glass according to any one of the preceding claims, wherein the design element (9) is surrounded by a full-surface black print, wherein the full-surface black print is preferably formed in an edge region of the laminated glass and preferably runs around the entire edge region of the laminated glass.

8. Laminated glass according to any one of the preceding claims, wherein the pane which is opposite the pane having the design element (9) has, in a congruent position with the design element, the same design element, a different design element or a full-surface black print.

9. Laminated glass according to any one of the preceding claims, wherein the two laminating layers (7, 8) are each a polyvinyl butyral (PVB) layer and/or one or more additional functional layers are arranged between the outer pane (5) and the inner pane (6).

10. Laminated glass according to any one of the preceding claims, wherein the black print of the design element (9) is formed from a ceramic paint.

11. Laminated glass according to any one of the preceding claims, which is a vehicle window or a building glazing, preferably a vehicle window.

12. Method for producing a laminated pane (18) according to any one of claims 1 to 11, comprising
a) image-based printing of a black color onto a partial region of a side of a pane, thereby forming a design element (9) consisting of a black print with one or more print-free regions,
b) providing an arrangement which comprises, in this order, an outer pane (5), a first laminating film (8), a second laminating film (7) and an inner pane (6), wherein the pane with the design element (9) obtained in step a) is used for the outer pane (5) or the inner pane (6), and wherein an opaque, non-black piece of film is positioned between the two laminating films (7, 8) in such a way that it is placed as a underlay (10) under the print-free region(s) (16) of the design element (9) in the finished laminated glass (18), and
c) heat treating the arrangement obtained in step b) in order to laminate the arrangement to form the laminated glass.

13. Method according to claim 12, wherein the image-based printing of the black color is carried out by means of screen printing, inkjet printing or laser transfer printing, with screen printing being preferred.

14. Method according to claim 12 or 13, wherein in step b) the opaque piece of film is pre-fixed to a laminating film after positioning, preferably by heat treatment.

15. Method according to any one of claims 12 to 14, wherein the positioning and optionally pre-fixing of the opaque piece of film on a laminating film takes place before or after it has been arranged on the arrangement to be formed.

## Revendications

1. Verre feuilleté (18) comprenant une vitre externe (5), une vitre interne (6), au moins deux couches de laminage (7, 8) disposées entre la vitre externe (5) et la vitre interne (6), et au moins un élément de stylisme (9), dans lequel l'élément de stylisme (9) est formé sur une zone partielle d'un côté vitre de la vitre externe (5) ou de la vitre interne (6) à partir d'une impression en noir (15) en forme d'image comportant une ou plusieurs zones sans impression (16) et une sous-couche (10) opaque, non noire, placée sous la ou les zones sans impression (16) de l'élément de stylisme (9) est disposée uniquement dans une zone partielle du verre feuilleté (18) entre les deux couches de laminage (7, 8), et dans lequel les couches de laminage (7, 8) sont présentes sur toute la surface dans toute la zone du verre feuilleté (18).

2. Verre feuilleté selon la revendication 1, dans lequel la sous-couche (10) présente une épaisseur dans la plage allant de 1 à 120 µm, de préférence de 10 à 100 µm et plus préférentiellement de 20 à 70 µm.

3. Verre feuilleté selon la revendication 1 ou 2, dans lequel la sous-couche (10) opaque non noire présente une couleur blanche.

4. Verre feuilleté selon l'une quelconque des revendications précédentes, dans lequel la sous-couche (10) opaque non noire est formée à partir de polyéthylène téréphtalate (PET).

5. Verre feuilleté selon l'une quelconque des revendications précédentes, dans lequel le côté vitre sur lequel l'élément de stylisme (9) est imprimé est le côté intérieur (2) de la vitre externe (5).

6. Verre feuilleté selon l'une quelconque des revendications précédentes, dans lequel la couche de laminage (8) située entre l'élément de stylisme (9) et la sous-couche (10) est transparente ou teintée, de préférence est transparente.

7. Verre feuilleté selon l'une quelconque des revendications précédentes, dans lequel l'élément de stylisme (9) est entouré d'une impression en noir réalisée sur toute la surface, dans lequel l'impression en noir réalisée sur toute la surface est de préférence réalisée dans une zone marginale du verre feuilleté et encercle de préférence toute la zone marginale du verre feuilleté.

8. Verre feuilleté selon l'une quelconque des revendications précédentes, dans lequel la vitre qui fait face à la vitre présentant l'élément de stylisme (9) présente, dans une position coïncidant avec l'élément de stylisme, le même élément de stylisme, un autre élément de stylisme ou une impression en noir sur toute la surface.

9. Verre feuilleté selon l'une quelconque des revendications précédentes, dans lequel les deux couches de laminage (7, 8) sont respectivement une couche de polybutyral de vinyle (PVB) et/ou une ou plusieurs couches fonctionnelles supplémentaires sont disposées entre la vitre externe (5) et la vitre interne (6).

10. Verre feuilleté selon l'une quelconque des revendications précédentes, dans lequel l'impression en noir de l'élément de stylisme (9) est formée à partir d'une couleur céramique.

11. Verre feuilleté selon l'une quelconque des revendications précédentes, lequel est une vitre de véhicule ou un vitrage de construction, de préférence est une vitre de véhicule.

12. Procédé de fabrication d'un verre feuilleté (18) selon l'une quelconque des revendications 1 à 11, comprenant
a) l'impression en forme d'image d'une couleur noire sur une zone partielle d'un côté d'une vitre, moyennant quoi un élément de stylisme (9) est formé à partir d'une impression en noir comportant une ou plusieurs zones sans impression,
b) la mise à disposition d'un agencement comprenant, dans cet ordre, une vitre externe (5), une première feuille de laminage (8), une seconde feuille de laminage (7) et une vitre interne (6), dans lequel, pour la vitre externe (5) ou la vitre interne (6), la vitre obtenue à l'étape a) et comportant l'élément de stylisme (9) est utilisée, et dans lequel une pièce formant feuille opaque non noire est positionnée entre les deux feuilles de laminage (7, 8) de sorte qu'elle soit placée sous la ou les zones sans impression (16) de l'élément de stylisme (9) en tant que sous-couche (10) dans le verre feuilleté (18) fini, et
c) le traitement thermique de l'agencement obtenu à l'étape b) pour le laminage de l'agencement en formant le verre feuilleté.

13. Procédé selon la revendication 12, dans lequel l'impression en forme d'image de la couleur noire est mise en œuvre au moyen d'une sérigraphie, impression par jet d'encre ou impression par transfert laser, dans lequel la sérigraphie est préférée.

14. Procédé selon la revendication 12 ou 13, dans lequel, à l'étape b), la pièce formant feuille opaque est préfixée après son positionnement sur une feuille de laminage, de préférence par traitement thermique.

15. Procédé selon l'une quelconque des revendications 12 à 14, dans lequel le positionnement et éventuellement la préfixation de la pièce formant feuille opaque sur une feuille de laminage sont effectués avant ou après sa disposition sur l'agencement à former.
